# FASCICULE DE BREVET EUROPEEN

(11) **EP 2 259 160 B1**
(45) Date de publication et mention de la délivrance du brevet: **01.05.2013**
(21) Numéro de dépôt: 09161989.0
(22) Date de dépôt: 05.06.2009
(51) Int. Cl.: G05B 19/401

(54) **Procédé et système pour détecter les variations de distance, et utilisation dans une machine outil**
Verfahren und System zur Erkennung von Abstandsveränderungen und Einsatz in einer Werkzeugmaschine
Method and system for detecting distance variations and use in a machining tool

(43) Date de publication de la demande: 08.12.2010
(73) Titulaire: Tornos SA, 2740 Moutier (CH)
(72) Inventeur: Zamofing, Sébastien, 25230 Seloncourt (FR)
(74) Mandataire: Scheuzger, Beat Otto

(56) Documents cités:
- EP-A1- 0 224 840
- WO-A1-2004/089570
- JP-A- 2001 138 181

## Description

La présente invention se rapporte au domaine technique général de la mesure d'une variation de distance, et plus particulièrement de la surveillance par mesure répétée d'une distance. Une telle surveillance est nécessaire, par exemple, dans une machine à usinage telle qu'une machine-outil, pour permettre une compensation des variations dimensionnelles dues aux effets thermiques ou d'usure pendant l'usinage d'une série de pièces.

L'invention concerne plus précisément un procédé, un système et un dispositif qui permettent de détecter des variations dimensionnelles. Dans une machine-outil, par exemple, l'invention permet de compenser les variations dues aux effets thermiques ou d'usure d'outil, ou à tout effet qui peut influencer les dimensions d'éléments d'une machine-outil pendant l'usinage. La détection ou mesure de ces variations dans une machine-outil permet à la machine-outil de compenser automatiquement les variations pendant l'usinage.

Bien que l'invention soit décrite dans le contexte d'une application à des machines-outils, cette réalisation n'en est qu'une parmi de nombreuses applications possibles en utilisant le principe de l'invention générale, à savoir la mesure d'un écart de positionnement d'un objet en mesurant un temps de contact entre un palpeur et l'objet. Par le terme « machine-outil » on comprend, par exemple, les machines à meulage, tournage, fraisage et décolletage.

L'invention s'applique avantageusement aux machines-outils qui répètent la même opération plusieurs fois, que ce soit sur un même poste, par exemple dans le cas d'un usinage répété plusieurs fois sur la même pièce, ou dans le cas où un usinage est effectué sur les différents postes que comprend la machine-outil.

Au niveau de chaque poste d'usinage, une telle machine-outil comprend un outil d'usinage ou un groupe d'outils d'usinage, supporté par une table mobile, et un organe moteur pour déplacer la table et ainsi le ou les outil(s).

Les organes moteurs de la machine-outil sont commandés par un dispositif de commande qui exploite un plan de commande préétabli, c'est-à-dire élaboré préalablement à l'usinage, et ce, en fonction des caractéristiques de profil de la pièce ou des pièces à réaliser.

La machine-outil comprend un dispositif de commande qui exploite un plan de commande qui a été préalablement construit et sous l'influence duquel est capable d'être réalisée au moins une opération d'usinage et, classiquement, une pluralité d'opérations d'usinage.

La construction du plan de commande est effectuée par inscription sur un support de mémorisation, d'informations qui constituent des instructions utilisables par le dispositif de commande pour commander au moins un organe moteur approprié.

Il s'avère que certains des éléments d'une machine-outil sont susceptibles de requérir au moins une correction de position afin de maintenir la précision d'usinage des pièces étant usinées. Par exemple, cette correction de position est nécessaire en raison d'une usure de l'outil ou à une dilatation thermique de la table ou du mécanisme qui maintient les pièces étant usinées.

Avantageusement, le dispositif de commande comprend une fonctionnalité qui permet de corriger le contenu d'un ensemble d'instructions définissant une opération d'usinage, plus particulièrement mais non exclusivement de manière à tenir compte d'une usure d'outil ou d'une variation de température qui affecte la position de cet outil relatif à chaque pièce usinée.

On connait (voir EP1559505, du même demandeur) un procédé pour détecter et calculer un écart de position d'un outil dans une machine-outil. Dans ce document, une position effective (réelle) relative à une position de référence est mesurée en terme de temps de trajet depuis une position de référence (position de départ), et comparée à une position théorique (souhaitée) prédéterminée. Le procédé de EP1559505 utilise des moyens de détecter le point de contact entre un outil (ou un palpeur) et la pièce étant usinée, plus particulièrement un contacteur qui est actionné lorsque l'outil vient en contact avec la surface de la pièce étant usinée. L'écart de position est mesuré et exprimé en terme de temps de trajet de l'outil (ou du palpeur) depuis un point de référence et le point de contact entre l'outil et la pièce étant usinée.

Les procédés connus possèdent toutefois les inconvénients suivants :
La mesure est calculée en terme de temps de trajet de l'outil/contacteur. Ceci est accompli par comptage de cycles de synchronisation de l'unité de commande numérique de la machine-outil, ce qui veut dire que la précision et la répétabilité de la mesure sont déterminées par plusieurs paramètres incluant, par exemple, la précision et la répétabilité de la vitesse du déplacement de l'outil/palpeur selon une trajectoire relativement longue, la fréquence du comptage, la justesse du comptage et la justesse et répétabilité des moyens de détecter le contact. Pour atteindre une haute précision de la mesure des variations d'écart, il faut une haute précision dans tous ces paramètres. Par conséquent, le procédé nécessite des composants (contacteur etc.) de très haute précision.
Un résultat que l'invention vise par conséquent à obtenir est un procédé et un système pour détecter les variations de distance entre un point à mesurer et un point de référence, en évitant la nécessité de mesurer ou calculer le temps de trajet relatif entre un capteur et le point à mesurer, et ainsi d'atteindre une précision de mesure élevée et/ou de permettre l'utilisation des composants d'une précision moins exigeante pour la fabrication du capteur.

Plus particulièrement, mais pas exclusivement, l'utilisation de ce procédé aux machines à usinage, telles que les machines-outils, pour compenser les variations dimensionnelles dans la machine, telles que les variations thermiques ou dues à l'usure des outils. Dans ce texte, on utilise le terme « variations thermiques » pour signifier des variations dimensionnelles, telles que dilatations ou contractions, dues à des changements de température. Un autre résultat que l'invention vise à obtenir est donc un procédé et système pour détecter les variations dimensionnelles dans une machine-outil, sans retarder ou ralentir sensiblement l'usinage.

Un autre résultat que l'invention vise à obtenir est un procédé, dispositif et système qui permettent la détermination des variations dimensionnelles dans une machine-outil, dans lequel la précision et/ou la répétabilité des mesures des variations d'usinage sont améliorées.

Un autre résultat que l'invention vise à obtenir est un procédé et système qui permettent la détermination des variations dimensionnelles dans une machine-outil, les moyens de réalisation du procédé étant disposés sans encombrement des autres éléments de la machine-outil.

Un autre résultat que l'invention vise à obtenir est un procédé, dispositif et système qui permettent la détermination des variations dimensionnelles dans une machine-outil, les moyens de réalisation du procédé étant capables d'atteindre une précision et/ou une répétabilité haute, même quand lesdits moyens comprennent des composants d'une spécification moins rigoureuse.

Un autre résultat que l'invention vise à obtenir est un procédé, dispositif et système qui permettent la détermination des variations dimensionnelles dans une machine-outil, le procédé étant au moins partiellement effectué par l'unité de commande numérique de la machine-outil, mais avec un minimum d'encombrement de mémoire de l'unité de commande numérique.

Un autre résultat que l'invention vise à obtenir est un procédé, dispositif et système qui permettent la mesure des variations thermiques et/ou d'usure dans une machine-outil multibroches pendant l'usinage.

Un autre résultat que l'invention vise à obtenir est un procédé, dispositif et système qui permettent la mesure des variations thermiques et/ou d'usure dans une machine-outil, sans encombrer les trajectoires des outils.

A cet effet, l'invention a pour objet un procédé selon la revendication 1, ainsi qu'un système selon la revendication 10.

Egalement, l'invention concerne un logiciel pour la mise en oeuvre du procédé, et un support de stockage sur lequel est enregistré le logiciel comprenant les étapes du procédé.

L'invention sera bien comprise à la lecture de la description ci-après faite à titre d'exemple non limitatif en regardant les dessins ci-annexés.

Sur les dessins :
La figure 1 représente schématiquement le fonctionnement d'une première réalisation d'un dispositif de palpage à contact selon l'invention.
La figure 2 représente schématiquement le fonctionnement d'une deuxième réalisation d'un dispositif de palpage à contact selon l'invention.
La figure 3 représente schématiquement le fonctionnement d'une troisième réalisation d'un dispositif de palpage à proximité selon l'invention.
La figure 4 représente schématiquement le fonctionnement d'une quatrième réalisation d'un dispositif de palpage à proximité selon l'invention.
Les figures 5 et 6 représentent en forme de graphe le principe de mesurer un écart de positionnement en fonction d'un temps de proximité selon l'invention.
Les figures 7a à 7c représentent schématiquement une réalisation d'un dispositif de palpage selon l'invention.
Les figures 8 et 9a à 9d représentent schématiquement une réalisation multidimensionnelle du concept de palpage selon l'invention.

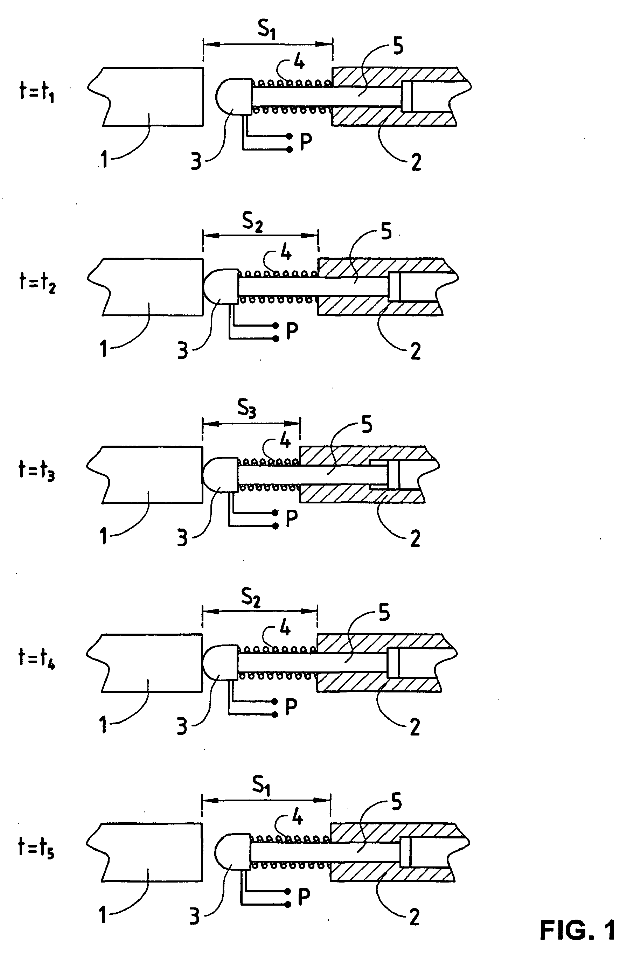

Les figures 1 à 4 représentent quatre exemples de palpage selon l'invention.

En se reportant à la figure 1, on voit une série de cinq étapes de palpage (t = t₁) à (t = t₅) par un palpeur 2 contre une cible, c'est-à-dire la surface de l'objet 1 à palper. Le palpeur 2 comprend une touche 5, un détecteur 3 et un ressort 4. Le palpeur et/ou la cible est déplacé par un agent moteur non représenté. Dans une machine-outil, par exemple, le palpeur peut être déplacé vers la surface du support de fixation de la pièce à usiner. Ou, dans le cas où la cible est l'arête d'un outil, c'est l'outil qui serait déplacé, sous commande de l'unité CNC de la machine, vers le palpeur 2.

Le détecteur 3 du palpeur 2 est adapté pour indiquer, par le signal P, un état de contact ou non-contact entre le détecteur 3 et la cible 1. Une mesure S=S₁ est représentée dans la figure pour indiquer une distance relative entre la cible 1 et le palpeur 2. La valeur absolue de cette distance S1 n'a pas d'importance pour le principe de l'invention, car on cherche à déterminer une variation de cette distance.

Dans la série de cinq étapes de palpage, le palpeur 2 et la cible 1 se déplacent relativement, l'un vers l'autre, depuis une disposition initiale (à l'instant t₁, distance S₁), vers une deuxième disposition (à l'instant t₂, distance S₂), où le palpeur 2 entre en contact avec la cible 1. Ultérieurement, l'approchement mutuel du palpeur 2 et la cible 1 continue vers une troisième disposition (à l'instant t₃, distance S₃) où la distance relative entre le palpeur et la cible a sa valeur minimale. Ceci est possible grâce au ressort 4, qui permet un déplacement relatif entre la touche 5 et le corps du palpeur 2, même quand le palpeur 2 (c'est-à-dire le détecteur 3) est en contact avec la cible 1. Après l'instant t₃, la cible et le palpeur commencent à s'éloigner vers une quatrième disposition mutuelle (à l'instant t₄, distance S₂), où le détecteur et la cible se séparent tels qu'ils ne sont plus en contact l'un avec l'autre. L'éloignement de la cible 1 par rapport au palpeur 2 continue jusqu'à l'instant t₅, à leur disposition terminale, où la distance entre les deux est de nouveau S₁.

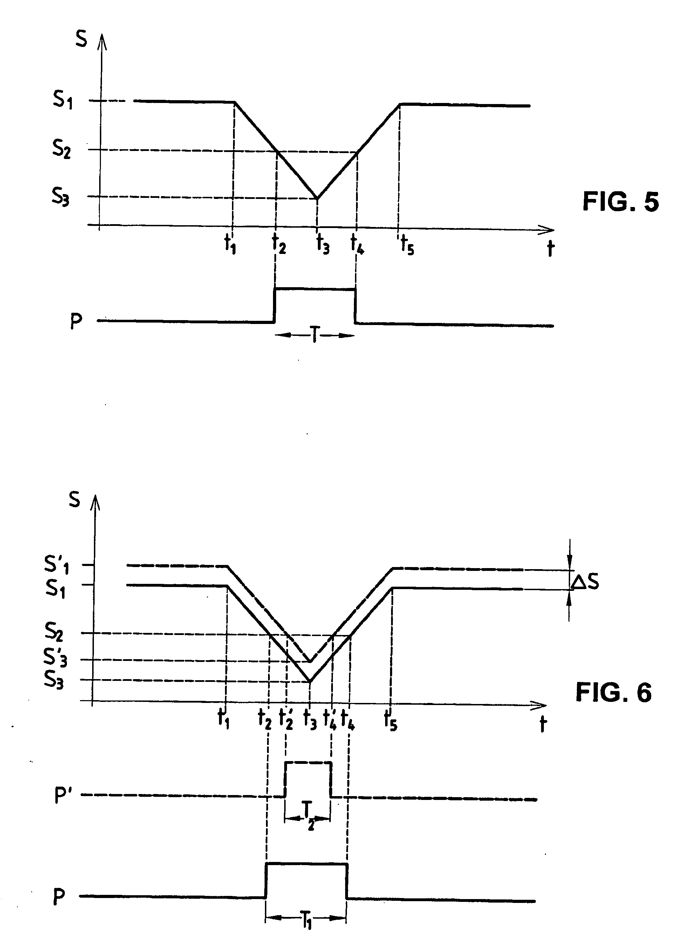

Dès que le détecteur et la cible sont en contact, le détecteur 3 indique cette condition par un changement dans l'état du signal P. Les correspondances entre la distance relative S (entre la cible 1 et le palpeur 2), le temps t et le signal P sont illustrées graphiquement dans la figure 5.

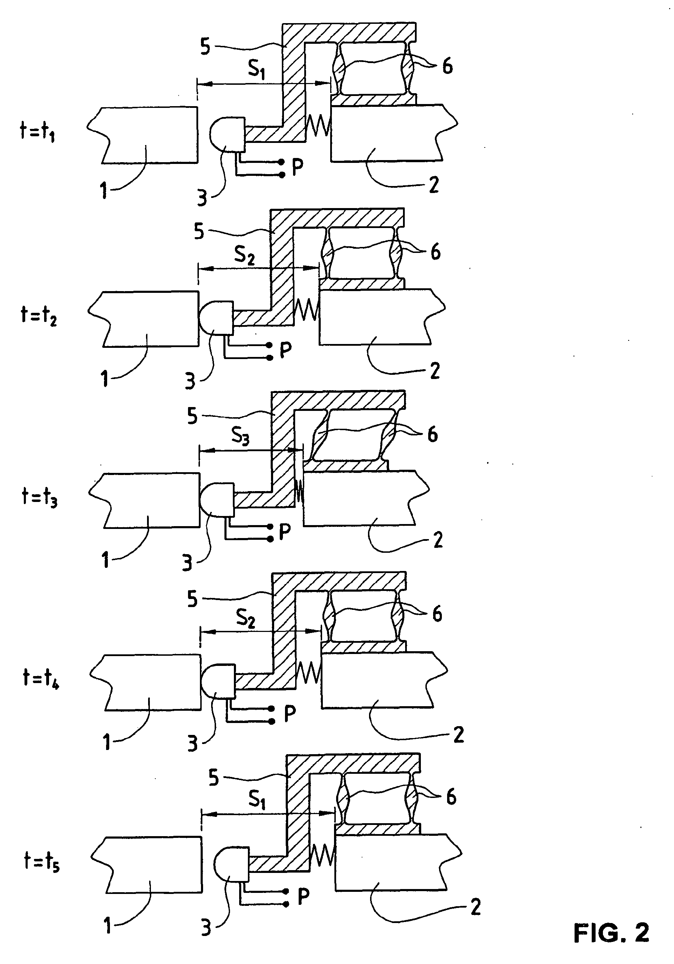

D'autres réalisations de palpage selon l'invention sont représentées dans les figures 2 à 4. Dans la réalisation représentée dans la figure 2, la possibilité de déplacement entre la touche 5 et le corps du palpeur 2 est réalisée par des lamelles à déformation élastique, en forme d'un parallélogramme. Un ressort 4, ou autre moyen de rappel, sert à rentrer la touche 5 et le corps du palpeur 2 vers leur disposition de repos après l'instant t₃.

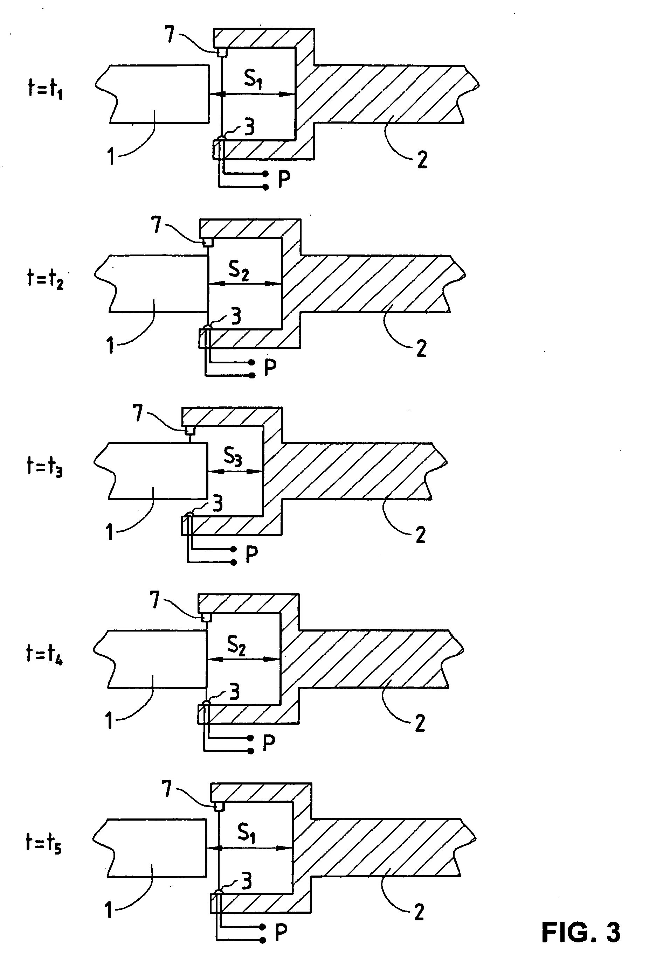

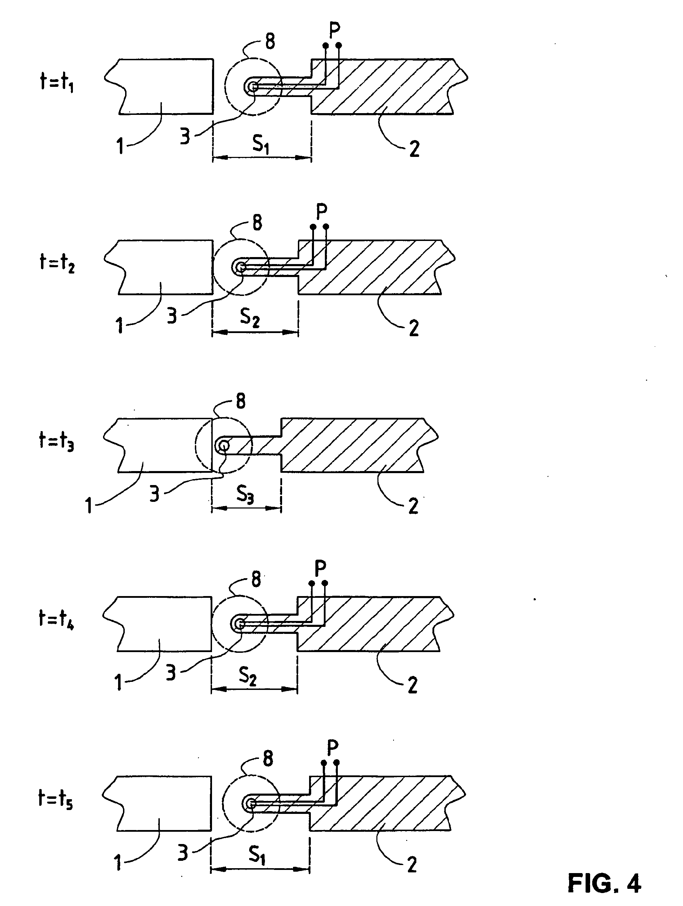

Dans la figure 3, le signal P indique si la cible se trouve dans une disposition de « contact » (rayon interrompu) ou de « non-contact » (rayon continu). Dans cette réalisation, une touche mobile par rapport au corps du palpeur n'est pas nécessaire, car un déplacement relatif entre la cible 1 et le palpeur 2, même quand la cible et le palpeur sont dans l'état de « contact », est de toute façon possible. Dans les réalisations représentées dans les figures 3 et 4, on parle plutôt d'un état de « proximité » ou de « détection » au lieu de « contact », car l'état est réalisé sans contact mécanique entre le palpeur, ou le détecteur, et la cible. Toutes sortes de moyens de détection peuvent être utilisées pour réaliser l'invention, bien qu'elles permettent un déplacement entre le palpeur et la cible quand ils sont dans l'état de détection, et bien qu'elles comportent une détection (c'est-à-dire une commutation entre les états de détection et non-détection) suffisamment répétable pour l'utilisation particulière.

Le système particulier de détection 3 de proximité peut être choisi parmi de nombreuses techniques connues, et selon les matériaux et la forme de la cible, comme par exemple des systèmes de détection ultrasoniques, magnétiques, capacitifs, infrarouges, de sonar, ou à caméra.

Les réalisations illustrées dans les figures 1 à 4 sont à titre d'exemples seulement, et ne représentent pas une définition limitative de l'invention. Toutes sortes de moyens de détection peuvent être utilisées, tant qu'ils sont capables de signaler une condition de proximité entre le palpeur et la cible, en leur permettant un déplacement relatif, l'un vers l'autre.

Le signal P dans les figures 1 à 4 indique un changement d'état à l'instant t₂, quand le palpeur détecte la proximité de la cible. Le signal P indique également un changement d'état au quatrième instant t₄, quand la détection de la cible par le palpeur est interrompue.

En se reportant maintenant à la figure 5, on voit une représentation graphique du déplacement relatif S entre le palpeur et la cible 1, en fonction du temps t. Le signal de détection P est également représenté en fonction du temps t. Dans le diagramme de la figure 5, l'approchement mutuel entre le palpeur 2 et la cible 1 (entre t₁ et t₃), et leur éloignement subséquent (entre t₃ et t₅) sont représentés comme des déplacements linéaires, à vitesse constante, mais en réalité le déplacement peut être à une vitesse variable, et la trajectoire spatiale relative entre le palpeur et la cible peut être une trajectoire quelconque, et n'est pas limitée à la trajectoire linéaire figurée. Ces paramètres illustratifs facilitent une explication du principe de palpage selon l'invention. Le temps de contact, ou le temps de détection, est représenté dans la figure 5 par la référence T. Le principe de l'invention présuppose qu'une partie finie du déplacement relatif entre le palpeur et la cible se déroule pendant qu'ils sont en contact (ou dans un état de proximité prédéterminé dans le cas des variantes de non-contact). Ceci a pour conséquence que le temps de contact (temps de détection, temps de proximité) T a une durée finie, c'est-à-dire non nulle.

Dans la figure 6 on voit la même situation qu'en figure 5, mais avec un deuxième cycle de palpage superposé, dans lequel la distance entre le palpeur et la cible a changé de ΔS depuis les premiers et deuxièmes palpages. Le premier palpage est représenté par les mêmes références que dans la figure 5 (t₁, t₂, t₃, t₄, t₅, S₁, S₂, S₃), par une ligne continue, et avec une durée du temps de détection de T₁. Le deuxième palpage, par contre, est représenté par les références (t₁, t'₂, t₃, t'₄, t₅, S₁', ', S₂, S₃'), une ligne hachurée, et ayant une durée du temps de détection de T₂.

Les premiers et deuxièmes cycles de palpage représentés dans la figure 6 se déroulent avec le même palpeur et la même cible, en se déplaçant selon la même trajectoire relative, et à une vitesse relative qui suit la même fonction du temps. Un changement de distance de ΔS entre la première disposition (distance S₁) et la deuxième distance (S'₁) entre le palpeur et la cible provoque ainsi un changement de temps de détection de ΔT = T₂ - T₁. Les distances S₁ et S'₁ ne sont pas mesurées ou connues d'une façon absolue, mais sont des distances relatives. C'est-à-dire que c'est le changement, ou l'écart, ΔS de distance que l'on mesure avec le procédé, le système et le dispositif selon l'invention, même sans avoir besoin des informations quant à des mesures spatiales absolues.

Dans la description des figures 1 à 6 on a représenté le palpeur avec un moyen de détection binaire, pour faciliter la mesure de l'intervalle de temps T entre deux changements d'état du signal P. Il est quand même également possible d'utiliser un détecteur numérique ou analogique ayant un nombre quelconque d'états possibles. Dans ce cas, le graphe du signal P binaire représenté dans les figures 5 et 6 aurait une forme plus complexe, et la détermination d'une variation entre un palpage et le suivant nécessiterait aussi un calcul plus complexe.

Vu qu'une grande partie de ces variations dans les pièces usinées est due aux variations thermiques et/ou d'usure d'outil dans la machine-outil, il est proposé de mesurer ces variations thermiques et/ou d'usure. Muni de ces informations, le logiciel de l'unité de commande peut déduire les variations dimensionnelles des pièces, et adapter l'usinage automatiquement pour les compenser.

Dans un exemple d'un palpage dans une machine-outil, un déplacement relatif est entraîné entre la touche 3 d'un palpeur 2 et la pointe d'un outil (surface à palper). Comme l'outil est de toute façon déplaçable sous contrôle d'une unité de commande, le capteur peut avantageusement être stationnaire, le palpage étant accompli par le déplacement de l'outil selon une trajectoire programmée dans l'unité de commande. Ce deuxième palpage peut se dérouler « en temps mort », c'est-à-dire pendant l'indexage du barillet de la machine multi-broche, quand l'usinage est de toute façon interrompu. La touche 3 du palpeur est de telle forme que l'outil puisse y accéder facilement et rapidement pendant le temps mort, avec une répétabilité haute (c'est-à-dire sans variation importante de la trajectoire et la vitesse de son déplacement). Cet ensemble constitue un système de base permettant de contrôler les variations dues à l'usure et/ou des variations thermiques de l'outil en question.

Dans une machine-outil, par exemple, les variations thermiques des pièces usinées sont de l'ordre de quelques centièmes de millimètre, et nécessitent un palpeur ayant une touche qui peut palper la surface à contrôler à une fréquence de répétition du palpage compatible avec l'usinage. Un palpeur est muni d'une touche capable de déplacement selon une trajectoire courte, par exemple de un ou deux millimètres seulement, la trajectoire étant essentiellement linéaire.

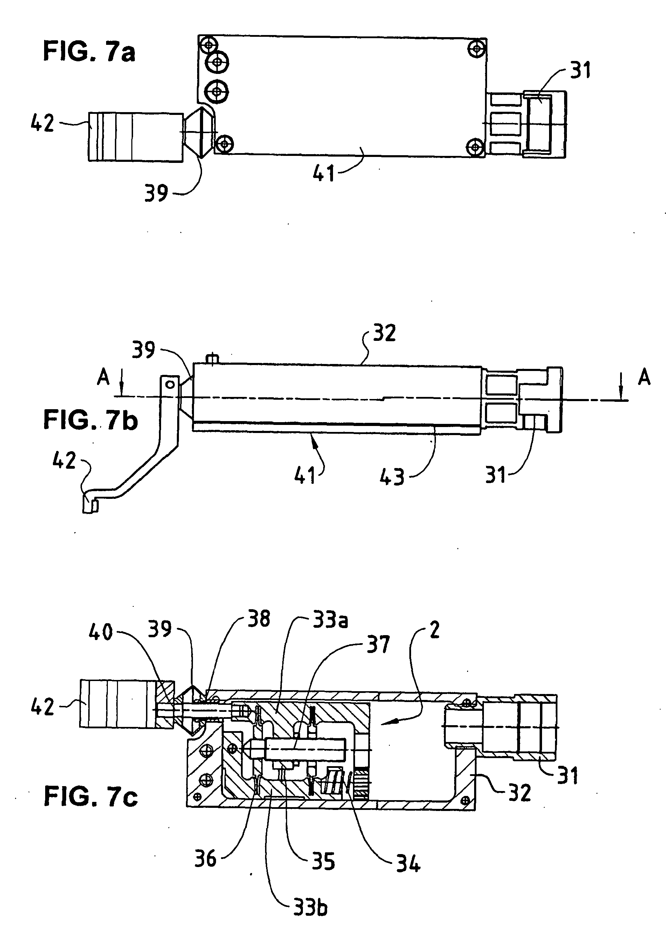

Le palpeur 2 représenté dans les figures 7a à 7c est incorporé dans un boîtier (32, 38, 39, 41, 43), et comprend des éléments mécaniques (des lamelles 36) qui permettent un déplacement linéaire et court de la touche 42 par rapport au boîtier 32. Les quatre lamelles de déformation 36 forment un guidage à parallélogramme du châssis 33a et de la touche 42. Le ressort du palpeur est réalisé avec un ressort de compression 34, qui sert à maintenir une force de rappel entre les parties 33a et 33b telles qu'elles se sont déséquilibrées vers leur disposition de repos. L'assemblage de palpage 2 comprend un bâti (comportant les éléments 33a et 33b), usiné d'une pièce d'acier, par exemple, tel qu'il comprend des lamelles à déformation élastique 36 qui permettent un déplacement des deux parties 33a et 33b du bâti relatif l'un à l'autre. La partie 33b est solidaire au boîtier 32. Le détecteur est réalisé par un micro-rupteur 37, solidaire à la partie 33a du bâti, et qui bute contre la partie statique 33b du bâti. Une goupille 35 sert à définir une position terminale du déplacement de la partie 33a par rapport à la partie 33b est ainsi la disposition de repos des deux parties 33a et 33b.

Le boîtier 32 consiste aussi en une enceinte protectrice adaptée aux conditions hostiles d'utilisation visées dans une machine-outil, par exemple, telles que l'huile d'usinage et/ou les copeaux. On déporte donc le phénomène à mesurer dans une « chambre » adaptée au capteur et dans une zone où l'encombrement mécanique de l'ensemble de palpage est acceptable.

L'ensemble des pièces mécaniques autour du micro-rupteur (37) permettent de jouer ce rôle d'interface entre le capteur et l'environnement d'utilisation.

Pour déporter le phénomène et éviter les problèmes d'encombrement, on utilise un ensemble touche de palpage (42, 40, 33a) ayant une portée et une forme aptes à transférer l'action mécanique de palpage depuis un endroit de la machine-outil vers l'intérieur de la « chambre », l'enceinte protectrice, du capteur.

La touche de palpage 42 permet d'adapter le système de mesure à différentes configurations de mesures (outil, poste d'usinage) et de disposer le capteur dans un endroit où la place est disponible. De cette manière, la touche peut être disposée près de l'objet à palper, ou à un endroit où elle est accessible pour être palpée par un outil (l'outil étant déplacé vers la touche du palpeur sous commande de l'unité de commande de la machine-outil).

Le guidage flexible à parallélogramme 36 permet de guider le déplacement de la touche et d'assurer au système une longévité intéressante car la déformation reste élastique ce qui ne provoque qu'une très faible fatigue de la matière.

Le mécanisme du palpeur est protégé dans une « chambre de mesure » qui l'isole de l'environnement hostile de la machine-outil, où il serait normalement exposé à des saletés d'usinage telles que l'huile et les copeaux. Cette chambre de mesure, ou enceinte protectrice, est réalisée par un boîtier (32) avec un couvercle (41) que l'on intègre dans la machine-outil via des vis de fixation. L'ouverture 31 comporte un presse-étoupe qui permet l'introduction des fils pour connecter le micro-rupteur 37 à une unité d'acquisition.

En position de repos, le système n'est pas en contact avec l'outil, et le ressort de rappel (34) maintient le guidage flexible (36) en appui sur la butée arrière réalisée avec une goupille (35). Le micro-rupteur n'est pas en contact avec sa cible et reste donc ouvert. Dans une disposition contraire, le micro-rupteur, la touche et le ressort peuvent être disposés tels que l'état de repos du micro-rupteur est fermé, et que l'action du palpage occasionne l'ouverture du micro-rupteur.

En position de travail, l'outil est en contact avec la touche (42) qui pousse le guidage flexible vers la gauche dans la figure 7. Le guidage flexible n'est plus en contact avec la butée arrière. Lorsque la touche est suffisamment avancée, le micro-rupteur 37 rentre en contact avec sa cible 33b et délivre un signal fermé : le contact vient d'avoir lieu. Lorsque l'outil revient en arrière (vers la droite dans la figure 7), on détecte identiquement par la réouverture du signal du micro-rupteur que l'outil est passé en-dessous du seuil de détection.

Dans la machine-outil on effectue avec une certaine fréquence un contrôle de l'outil qui consiste à venir pousser en avant la touche de palpage (42) puis de la retirer.

Le système délivre un signal « tout ou rien » que l'on associe à d'autres informations du système (par exemple une mesure de la distance et/ou de la vitesse de déplacement de l'outil, mesurées ou déduites par l'unité de commande de la machine-outil) pour en déterminer une mesure « objective ». Ce procédé de palpage permet donc de déduire une variation de position de l'outil depuis le signal tout ou rien.

Dans l'application à une machine-outil, une série de cycles de palpage est exécutée, à une fréquence liée avantageusement à la fréquence des cycles d'usinages. De cette manière, une série de mesures est générée pendant l'usinage, chaque mesure étant comparée à une mesure de référence. Dans le cas le plus simple il est possible de prendre la mesure précédente comme mesure de référence. Il est aussi possible de calculer une valeur de référence depuis un jeu de mesures précédentes (par exemple en une fonction de moyenne).

Une optimisation de ces données est aussi proposée, en détectant les données aberrantes ou moins pertinentes. Ce filtrage de données peut être réalisé dans l'unité de commande d'une machine-outil, qui peut exécuter des algorithmes pour sélectionner les données historiques les plus pertinentes pour calculer la valeur moyenne, par exemple. Cette sélection peut éliminer les mesures les plus anciennes, par exemple, ou des mesures manquantes, ou des mesures à valeurs hors d'une certaine plage prédéterminée, selon les besoins de l'usinage particulier. Un arrêt de la machine-outil, et son redémarrage subséquent, peuvent occasionner un saut soudain apparent dans la série de valeurs mesurées, dû à un refroidissement des organes de la machine-outil. Dans un tel cas, le filtrage des données devrait être capable de recommencer le calcul de référence avec les nouvelles valeurs, en ignorant les mesures avant la pause. Autrement, le filtrage pourrait introduire un facteur d'écart pour supprimer le saut.

A chaque cycle de palpage, un ou plusieurs coefficients de correction sont calculés depuis la valeur mesurée et la ou les valeur(s) de référence.

Dans certaines machines-outils, il est préférable de réduire l'emplacement de mémoire utilisée. Ainsi on effectue le traitement des données avec facteur d'oubli, c'est-à-dire qui affecte à une valeur un poids en fonction de son ancienneté.

Au démarrage, le système doit déterminer la valeur de référence. La première mesure peut être prise comme la valeur de référence. Il subsiste cependant un risque important que la première mesure soit aberrante ; dans ce cas le système considérerait la première mesure comme bonne et toutes les autres comme mauvaises. Une phase de pré-filtrage, tenant compte des plusieurs premières mesures (ajustées, si nécessaire, à une série de mesures précédentes) permet de déterminer une valeur de référence non-aberrante.

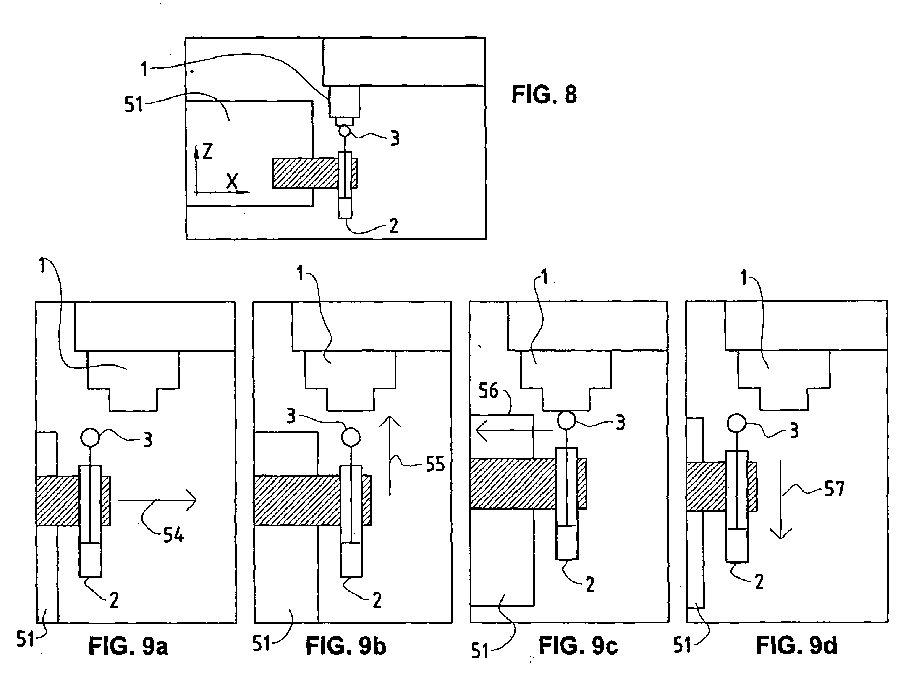

En se reportant à la figure 8 et aux figures 9a à 9d, on voit en vue schématique un palpage selon l'invention, le palpage étant réalisé avec une trajectoire de palpage multidimensionnelle.

Dans l'exemple représenté dans les figures 8 et 9, un palpeur 2 est entraîné en déplacement 54, 55 vers une cible 1, de la manière déjà décrite pour un palpage dans une dimension. Cependant, dans cette variante, le palpeur est déplacé selon deux axes, comme représenté dans les figures 9b et 9c. Dans la figure 9b, le palpeur et la cible s'approchent selon 54, 55 jusqu'à ce qu'ils soient en contact (ou dans « l'état de proximité prédéterminé »). En plus, comme représenté dans la figure 9c, le palpeur est entraîné en un deuxième déplacement selon un axe 56 orthogonal à l'axe 55 du premier déplacement de la figure 9b. La forme de la cible 1 et celle de la touche 3, sont telles que, à un moment pendant le deuxième déplacement 56, que l'état de contact/proximité entre la touche et la cible n'existe plus. Un signal P (non représenté) indique les instants du début et de la fin du contact, et ce signal P peut être utilisé (par l'unité de commande de la machine-outil par exemple) pour calculer une variation dans les dimensions de la cible et/ou de la position relative de la cible par rapport à la touche ou par rapport à une référence.

Le palpage illustré dans les figures 9a à 9d est bidimensionnel, mais le même principe peut être appliqué dans les trois dimensions. La trajectoire 54, 55, 56, 57 du palpage illustrée est selon deux axes 55, 56 orthogonale et linéaire, mais elle peut également être une trajectoire quelconque tridimensionnelle, à des sections linéaires et/ou non-linéaires.

Le palpage illustré dans les figures 9a à 9d génère une mesure du temps de contact/proximité pendant la trajectoire 54, 55, 56, 57 du palpage. Donc, pour en dériver une mesure de la variation dimensionnelle de la cible, ou de la position relative de la cible par rapport au palpeur et/ou à une référence, ce procédé multidimensionnel bénéficie des informations supplémentaires concernant le déplacement 54, 55, 56, 57 du palpeur par rapport à la cible. Ces informations peuvent être les informations de l'encodeur de position de la table 51 qui génère le mouvement relatif entre la cible et le palpeur dans une machine-outil par exemple. Dans d'autres applications, ces informations de référence peuvent être élaborées par des moyens conventionnels, selon les particularités de l'application.

Ces informations peuvent être également un ou plusieurs signaux de l'unité de commande, chaque signal spécifiant que la table 51 a atteint un point de référence au cours de la trajectoire 54, 55, 56, 57 du palpage.

## Revendications

1. Procédé pour déterminer une variation de distance (S) entre un premier élément, dit palpeur (2), et un second élément, dit cible (1),
la cible (1) et le palpeur (2) étant dans l'une d'une pluralité de dispositions mutuelles, la pluralité de dispositions incluant une première disposition, dite disposition de non-proximité, et une seconde disposition, dite disposition de proximité, lesdites dispositions de proximité et de non-proximité étant différenciées selon au moins un paramètre prédéterminé,
le palpeur (2) étant muni des moyens de détection (3), pour indiquer la présence instantanée de ladite disposition de proximité ou de ladite disposition de non-proximité,
le procédé comprenant une première étape d'entraînement de la cible (1) et du palpeur (2) en déplacement relatif l'un par rapport à l'autre selon une trajectoire prédéterminée, à une vitesse de déplacement dont la valeur est une première fonction prédéterminée du temps,
le procédé étant **caractérisé en ce que** :
ladite trajectoire est telle que la cible (1) et le palpeur (2) s'approchent depuis la disposition de non-proximité vers la disposition de proximité, puis s'éloignent depuis la disposition de proximité vers la disposition de non-proximité, telle que la cible (1) et le palpeur (2) sont dans la disposition de proximité pendant un intervalle de temps (T₂), et telle qu'une partie dudit déplacement relatif de la cible (1) et du palpeur (2) se déroule pendant ledit intervalle de temps (T₂),
et **en ce que** le procédé comprend une seconde étape de mesure dudit intervalle de temps (T₂), et
une troisième étape de comparaison dudit intervalle de temps (T₂) avec un temps de référence prédéterminé (T₁).

2. Procédé selon la revendication 1, dans laquelle ladite trajectoire prédéterminée est telle que ladite partie dudit déplacement relatif comprend au moins deux déplacements (54, 55, 56, 57) non-colinéaires.

3. Procédé selon l'une des revendications 1 ou 2, dans lequel lesdites premières, secondes et troisièmes étapes sont répétées pour chacun d'une série de cycles, le procédé comprenant une quatrième étape de détermination, pour chacun desdits cycles, dudit temps de référence (T₁) en fonction de l'intervalle du temps mesuré (T₂) dans au moins un des cycles précédents.

4. Procédé selon la revendication 3, comprenant une cinquième étape de redéfinition, au moins une fois pendant ladite série de cycles, de ladite trajectoire et/ou de ladite première fonction du temps, en fonction de l'intervalle du temps mesuré (T₂) dans au moins un des cycles précédents.

5. Procédé selon l'une des revendications 1 à 4, réalisé dans une machine-outil pour l'usinage d'une série de pièces, au moins un des premier et second éléments étant un organe de la machine-outil.

6. Procédé selon la revendication 5, dans lequel l'usinage est adapté en fonction de ladite variation de distance déterminée.

7. Procédé selon l'une des revendications 3 à 6, dans lequel chaque temps de référence (T₁) est déterminé en fonction des intervalles de temps mesurés (T₂), dits données historiques, dans une pluralité de cycles précédents, et dans lequel ladite quatrième étape comprend un filtrage desdites données historiques pour supprimer des données historiques aberrantes et/ou moins pertinentes.

8. Procédé selon la revendication 7, dans lequel ledit filtrage des données historiques comprend une pondération des données historiques en fonction de leurs anciennetés respectives.

9. Procédé selon l'une des revendications 1 à 8, comprenant une sixième étape de mesure, pour le ou chaque cycle des premières à troisièmes étapes, d'au moins une partie du déplacement du palpeur (2) et/ou du déplacement de la cible (1) relatif à un point de référence, et
une septième étape de détermination, pour le ou chaque cycle des premières à troisièmes étapes, d'une variation de la position de la cible (1) et/ou du palpeur (2) par rapport au point de référence.

10. Système pour détecter et calculer un écart de positionnement d'un élément (1) du système, le système comprenant ;
au moins un premier élément (1, 2) et un second élément (1, 2),
un desdits premiers et seconds éléments (1, 2), dit élément à mesurer (1), ayant au moins une partie susceptible de variation de position relative audit système,
un desdits premiers et seconds éléments (1, 2), dit élément détecteur (2), étant muni d'un moyen de détection (3) pour indiquer une disposition de proximité relative entre ledit élément détecteur (2) et l'autre desdits premiers et seconds éléments (1, 2), le moyen de détection (3) ayant au moins deux états, les au moins deux états comprenant un premier état indiquant que la distance entre lesdits premiers et seconds éléments (1, 2) est inférieure à un seuil prédéterminé, et dans un second état indiquant que la distance entre lesdits premiers et seconds éléments (1, 2) est supérieure audit seuil prédéterminé,
un desdits premiers et seconds éléments (1, 2), dit élément mobile (1, 2), étant capable d'être déplacé selon une trajectoire prédéterminée sous commande d'une unité de commande, à une vitesse de déplacement dont la valeur est une fonction prédéterminée du temps,
ladite trajectoire comprenant un premier point, dit point de départ, auquel l'élément mobile (1, 2) et l'autre desdits premiers et seconds éléments (1, 2) ne sont pas dans ladite disposition de proximité,
ladite trajectoire comprenant un second point, dit point de référence, auquel l'élément mobile (1, 2) a des coordonnées prédéterminées relatives au système,
le système étant **caractérisé en ce que**
ladite trajectoire comprend une première région, dite région de palpage, où l'élément mobile (1, 2) et l'autre desdits premiers et seconds éléments (1, 2) sont dans ladite disposition de proximité,
ladite région de palpage comprend un troisième point, dit point terminal, intérieur à ladite région de palpage,
et **en ce que** le système comprend
des moyens d'entraînement (51) pour effectuer un premier déplacement dudit élément mobile (1, 2) selon ladite trajectoire prédéterminée à ladite vitesse de déplacement prédéterminée depuis le point de référence jusqu'au point terminal, et puis un second déplacement dudit élément mobile (1, 2) depuis le point terminal jusqu'au point de départ,
des moyens de mesure pour, pendant lesdits premiers et seconds déplacements, mesurer au moins un premier intervalle de temps, dit intervalle de contact, qui est le temps entre un premier instant, dit instant de touche, où l'élément détecteur (2) subit un premier changement d'état, et un second instant, dit instant de relâche, où le détecteur (2) subit un second changement d'état, et
des moyens de comparaison pour comparer l'intervalle de contact mesuré par les moyens de mesure avec un second intervalle de temps prédéterminé, dit intervalle de contact de référence.

11. Système selon la revendication 10, le système étant une machine-outil et au moins un desdits premiers et seconds éléments (1, 2) étant un organe de la machine-outil.

12. Système selon l'une des revendications 10 à 11, dans lequel l'élément détecteur (2) comprend un interrupteur (37) disposé dans une enceinte protectrice (32, 38, 39, 41, 43).

13. Système selon l'une des revendications 10 à 12, dans lequel l'élément détecteur (2) est constitué par un dispositif de palpage comprenant
un palpeur (2),
les moyens de déplacement (51) permettant un entrainement en déplacement du palpeur (2) relatif à la cible (1) selon la trajectoire prédéterminée,
le moyen de détection (3) adapté à détecter l'état de proximité prédéterminé entre le palpeur (2) et la cible (1),
les moyens de déplacement (4) étant adaptés à entrainer le déplacement relatif entre le palpeur (2) et la cible (1) selon la trajectoire prédéterminée même quand le palpeur (2) et la cible (1) sont dans ledit état de proximité.

14. Système selon la revendication 13, dans lequel le palpeur comprend une touche (5), et dans lequel le moyen de détection (3) est un moyen de détection d'un contact entre la touche (5) et la cible (1).

15. Système selon la revendication 13, dans lequel le moyen de détection (3) est un moyen de détection de non-contact (3, 7, 8).

## Claims

1. Method for detecting a variation in distance (S) between a first element, referred to as probe (2), and a second element, referred to as target (1),
the target (1) and the probe (2) being in one of a plurality of mutual positions, the plurality of positions including a first position, referred to as non-proximity position, and a second position, referred to as proximity position, the said proximity and non-proximity positions being differentiated according to at least one predetermined parameter,
the probe (2) being equipped with detection means (3), for indicating the instantaneous presence of the said proximity position or the said non-proximity position,
the method comprising a first step of driving of the target (1) and of the probe (2) in relative displacement, one with respect to the other, along a predetermined path, at a speed of displacement the value of which is a first predetermined function of time,
the method being **characterised in that**:
the said path is such that the target (1) and the probe (2) approach each other from the non-proximity position toward the proximity position, then move away from each other from the proximity position toward the non-proximity position, such that the target (1) and the probe (2) are in the proximity position during a time interval (T₂), and such that one part of said relative displacement of the target (1) and of the probe (2) takes place during said time interval (T₂),
and **in that** the method comprises a second step of measurement of said time interval (T₂), and
a third step of comparison of said time interval (T₂) with a predetermined reference time (T₁).

2. Method according to claim 1, wherein the said predetermined path is such that the said part of the said relative displacement comprises at least two non-collinear displacements (54, 55, 56, 57).

3. Method according to one of the claims 1 or 2, wherein the said first, second and third steps are repeated for each of a series of cycles, the method comprising a fourth step of determination, for each of the said cycles, of the said reference time (T₁) as a function of the measured time interval (T₂) in at least one of the preceding cycles.

4. Method according to claim 3, comprising a fifth step of redefinition, at least once during the said series of cycles, of the said path and/or of the said first time function, as a function of the measured time interval (T₂) in at least one of the preceding cycles.

5. Method according to one of the claims 1 to 4, carried out in a machine tool for machining a series of pieces, at least one of the first and second elements being an element of the machine tool.

6. Method according to claim 5, wherein the machining is adapted as a function of the said predetermined variation of distance.

7. Method according to one of the claims 3 to 6, wherein each reference time (T₁) is determined according to the measured time intervals (T₂), referred to as historical data, in a plurality of preceding cycles, and wherein the said fourth step comprises a filtering of the said historical data to eliminate anomalous and/or less relevant historical data.

8. Method according to claim 7, wherein the said filtering of the historical data comprises a weighting of the historical data according to their respective ages.

9. Method according to one of the claims 1 to 8, comprising a sixth step of measurement, for the or each cycle of the first to third steps, of at least one part of the displacement of the probe (2) and/or of the displacement of the target (1) relative to a reference point, and
a seventh step of detection, for the or each cycle of the first to third steps, of a variation in the position of the target (1) and/or of the probe (2) with respect to a reference point.

10. System for detecting and calculating a spacing apart in positioning of an element (1) of the system, the system comprising:
at least one first element (1, 2) and one second element (1, 2),
one of said first and second elements (1, 2), referred to as element to measure (1), having at least one part subject to variation in position relative to the said system,
one of said first and second elements (1, 2), referred to as detector element (2), being equipped with a detection means (3) for indicating a relative proximity position between the said detector element (2) and the other of said first and second elements (1, 2), the detection means (3) having at least two states, the at least two states comprising a first state indicating that the distance between the said first and second elements (1, 2) is less than a predetermined threshold, and in a second state indicating that the distance between the said first and second elements (1, 2) is greater than said predetermined threshold,
one of the said first and seconds elements (1, 2), referred to as movable element (1, 2), being able to be displaced along a predetermined path under control of a control unit, at a speed of displacement the value of which is a predetermined function of the time,
the said path comprising a first point, referred to as starting point, at which the movable element (1, 2) and the other of the said first and second elements (1, 2) are not in the said proximity position,
the said path comprising a second point, referred to as reference point, at which the movable element (1, 2) has predetermined coordinates relative to the system,
the system being **characterised in that**
the said path comprises a first region, referred to as probe region, where the movable element (1, 2) and the other of the said first and second elements (1, 2) are in the said proximity position,
the said probe region comprises a third point, referred to as terminal point, inside the said probe region,
and **in that** the system comprises
drive means (51) for carrying out a first displacement of the said movable element (1, 2) along the said predetermined path at the said predetermined speed of displacement from the reference point to the terminal point, and then a second displacement of the said movable element (1, 2) from the terminal point to the starting point,
measuring means for, during the said first and second displacements, measuring at least a first time interval, referred to as contact interval, which is the time between a first instant, referred to as instant of contact, where the detector element (2) undergoes a first change of state, and a second instant, referred to as instant of release, where the detector (2) undergoes a second change of state, and
comparison means for comparing the contact interval measured by the measuring means with a second predetermined time interval, referred to as reference contact interval.

11. System according to claim 10, the system being a machine tool and at least one of said first and second elements (1, 2) being an element of the machine tool.

12. System according to one of the claims 10 to 11, wherein the detector element (2) comprises a switch (37) disposed in a protective enclosure (32, 38, 39, 41, 43).

13. System according to one of the claims 10 to 12, wherein the detector element (2) is constituted by a probe device comprising
a probe (2),
displacement means (51) enabling a driving in displacement of the probe (2) relative to the target (1) along the predetermined path,
the detection means (3) adapted to detect the predetermined state of proximity between the probe (2) and the target (1),
the displacement means (4) being adapted to drive the relative displacement between the probe (2) and the target (1) along the predetermined path even when the probe (2) and the target (1) are in the said state of proximity.

14. System according to claim 13, wherein the probe comprises a touch probe (5), and wherein the detection means (3) is a means of detection of a contact between the touch probe (5) and the target (1).

15. System according to claim 13, wherein the detection means (3) is a means of detection of non-contact (3, 7, 8).

## Patentansprüche

1. Verfahren zum Erkennen einer Abstandsänderung (S) zwischen einem ersten Element, Fühler (2) genannt, und einem zweiten Element, Ziel (1) genannt,
wobei sich das Ziel (1) und der Fühler (2) in einer aus einer Mehrzahl verschiedener gegenseitigen Anordnungen befinden, wobei die Mehrzahl der Anordnungen eine erste Anordnung, genannt Nichtnähe-Anordnung, und eine zweite Anordnung, genannt Nähe-Anordnung, umfasst, wobei sich die genannten Nichtnähe-Anordnung und Nähe-Anordnung durch mindestens einen vorbestimmten Parameter unterscheiden,
wobei der Fühler (2) mit Detektionsmittel (3) zum Anzeigen des momentanen Vorhandenseins der genannten Nähe-Anordnung oder der genannten Nichtnähe-Anordnung ausgestattet ist,
wobei das Verfahren einen ersten Schritt mit dem Antreiben des Ziels (1) und des Fühlers (2) in relative Bewegung zueinander entlang einer vorbestimmten Bahn, mit einer Bewegungsgeschwindigkeit, deren Wert eine erste vorbestimmte Funktion der Zeit ist, umfasst,
wobei das Verfahren **dadurch gekennzeichnet ist, dass**:
die genannte Bahn derart ist, dass sich das Ziel (1) und der Fühler (2) aus der Nichtnähe-Anordnung gegen die Nähe-Anordnung nähern, und sich danach aus der Nähe-Anordnung zur Nichtnähe-Anordnung entfernen, so dass sich das Ziel (1) und der Fühler (2) während eines Zeitintervalls (T₂) in der Nähe-Anordnung befinden, und so dass ein Teil der genannten relativen Bewegung des Ziels (1) und des Fühlers (2) während des genannten Zeitintervalls (T₂) stattfindet,
und dass das Verfahren einen zweiten Schritt mit dem Messen des genannten Zeitintervalls (T₂) umfasst, und
einen dritten Schritt mit dem Vergleichen des genannten Zeitintervalls (T₂) mit einer vorbestimmten Referenzzeit (T₁).

2. Verfahren gemäss Anspruch 1, in welchem die genannte Bahn derart ist, dass der genannte Teil der relativen Bewegung mindestens zwei nicht kollineare Bewegungen (54, 55, 56, 57) umfasst.

3. Verfahren gemäss einem der Ansprüche 1 oder 2, in welchem der genannte erste, zweite und dritte Schritt für jeden aus einer Serie der Zyklen wiederholt werden, wobei das Verfahren einen vierten Schritt umfasst, mit dem Bestimmen, für jeden der genannten Zyklen, der genannten Referenzzeit (T₁) in Abhängigkeit vom gemessenen Zeitintervall (T₂) in mindestens einem der vorangehenden Zyklen.

4. Verfahren gemäss Anspruch 3, umfassend einen fünften Schritt mit der Neudefinition, mindestens einmal während der genannten Serie der Zyklen, der genannten Bahn und/oder der genannten ersten Zeitfunktion, in Abhängigkeit vom gemessenen Zeitintervall (T₂) in mindestens einem der vorangehenden Zyklen.

5. Verfahren gemäss einem der Ansprüche 1 bis 4, ausgeführt in einer Werkzeugmaschine zur Bearbeitung einer Werkstückserie, wobei mindestens das erste oder das zweite Element Bestandteile der Werkzeugmaschine sind.

6. Verfahren gemäss Anspruch 5, in welchem die Bearbeitung in Abhängigkeit von der genannten vorbestimmten Abstandsänderung angepasst wird.

7. Verfahren gemäss einem der Ansprüche 3 bis 6, in welchem jede Referenzzeit (T₁) bestimmt wird gemäss den gemessenen Zeitintervallen (T₂), genannt historische Daten, in einer Mehrzahl der vorangehenden Zyklen, und in welchem der genannte vierte Schritt ein Filtrieren der genannten historischen Daten umfasst, um die abweichenden und/oder weniger zutreffenden historischen Daten zu eliminieren.

8. Verfahren gemäss Anspruch 7, in welchem das genannte Filtern der historischen Daten eine Gewichtung der historischen Daten gemäss ihren jeweiligen Altersstufen umfasst.

9. Verfahren gemäss einem der Ansprüche 1 bis 8, umfassend einen sechsten Schritt mit dem Messen, für den oder jeden Zyklus des ersten bis dritten Schritts, des mindestens eines Teils der Bewegung des Fühlers (2) und/oder der Bewegung des Ziels (1) im Bezug auf einen Bezugspunkt, und
einen siebten Schritt mit dem Detektieren, für den oder jeden Zyklus des ersten bis dritten Schritts, einer Änderung in der Position des Ziels (1) und/oder des Fühlers (2) im Bezug auf den Bezugspunkt.

10. System zum Detektieren und Berechnen einer Positionierungsabweichung eines Elements (1) des Systems, das System umfassend:
mindestens ein erstes Element (1, 2) und ein zweites Element (1, 2),
wobei entweder das genannte erste oder zweite Element (1, 2), genannt zu messendes Element (1), mindestens einen Bestandteil hat, welcher zur Änderung der Positionierung im Bezug auf das genannte System geeignet ist,
wobei entweder das genannte erste oder zweite Element (1, 2), genannt Detektorelement (2), mit einem Detektionsmittel (3) zum Anzeigen einer relativen Nähe-Anordnung zwischen dem genannten Detektorelement (2) und dem anderen der beiden genannten ersten oder zweiten Elemente (1, 2) ausgestattet ist, wobei das Detektionsmittel (3) mindestens zwei Zustände hat, wobei diese mindestens zwei Zustände einen ersten Zustand, welcher anzeigt, dass der Abstand zwischen den genannten ersten und zweiten Elementen (1, 2) kleiner ist als eine vorbestimmte Schwelle, und in einem zweiten Zustand, welcher anzeigt, dass der Abstand zwischen den genannten ersten und zweiten Elementen (1, 2) grösser ist als eine vorbestimmte Schwelle, umfassen,
wobei eines der genannten ersten oder zweiten Elementen (1, 2), genannt mobiles Element (1, 2), in der Lage ist, entlang einer vorbestimmten Bahn unter der Kontrolle einer Kontrolleinheit bewegt zu werden, mit einer Bewegungsgeschwindigkeit, deren Wert eine erste vorbestimmte Funktion der Zeit ist,
wobei die genannte Bahn einen ersten Punkt umfasst, genannt Startpunkt, in welchem sich das mobile Element (1, 2) und das andere der ersten oder zweiten Elemente (1, 2) nicht in der genannten Nähe-Anordnung befinden,
wobei die genannte Bahn einen zweiten Punkt umfasst, genannt Referenzpunkt, in welchem das mobile Element (1, 2) vorbestimmte Koordinaten im Bezug auf das System hat,
wobei das System **dadurch gekennzeichnet ist, dass**
die genannte Bahn eine erste Region hat, genannt Fühlerregion, wo sich das mobile Element (1, 2) und das andere der ersten und zweiten Elemente (1, 2) in der genannten Nähe-Anordnung befinden,
die genannte Fühlerregion einen dritten Punkt umfasst, genannt Endpunkt, im Inneren der genannten Fühlerregion,
und dass das System umfasst
Antriebsmittel (51) zum Durchführen einer ersten Bewegung des genannten mobilen Elements (1, 2) entlang der genannten vorbestimmten Bahn mit der genannten vorbestimmten Bewegungsgeschwindigkeit vom Referenzpunkt bis zum Endpunkt, und dann einer zweiten Bewegung des genannten mobilen Elements (1, 2) vom Endpunkt zum Startpunkt,
Messmittel zum, während der genannten ersten und zweiten Bewegung, Messen mindestens eines ersten Zeitintervalls, genannt Kontaktintervall, welcher die Zeit ist zwischen einem ersten Moment, genannt Kontaktmoment, wo das Detektorelement (2) eine erste Zustandsänderung erfährt, und einem zweiten Moment, genannt Lösemoment, wo der Detektor (2) eine zweite Zustandsänderung erfährt, und
Vergleichsmittel zum Vergleichen des durch das Messmittel gemessenen Kontaktintervalls mit einem zweiten vorbestimmten Zeitintervall, genannt Referenzkontaktintervall.

11. System gemäss Anspruch 10, wobei das System eine Werkzeugmaschine ist, und wobei mindestens das erste oder das zweite Element (1, 2) ein Bestandteil der Werkzeugmaschine sind.

12. System gemäss einem der Ansprüche 10 bis 11, in welchem das Detektorelement (2) einen Schalter (37) umfasst, welcher in einem Schutzgehäuse (32, 38, 39, 41, 43) angeordnet ist.

13. System gemäss einem der Ansprüche 10 bis 12, in welchem das Detektorelement (2) gebildet ist durch eine Fühlervorrichtung umfassend
einen Fühler (2),
die Bewegungsmittel (51), welche einen Bewegungsantrieb des Fühlers (2) relativ zum Ziel (1) entlang der vorbestimmten Bahn ermöglichen,
das Detektionsmittel (3), angepasst, um den vorbestimmte Nähe-Zustand zwischen dem Fühler (2) und dem Ziel (1) zu detektieren,
die Bewegungsmittel (4), welche angepasst sind, um die relative Bewegung zwischen dem Fühler (2) und dem Ziel (1) entlang der vorbestimmten Bahn anzutreiben, auch wenn sich der Fühler (2) und das Ziel (1) im genannten Nähe-Zustand befinden.

14. System gemäss Anspruch 13, in welchem der Fühler eine Taste (5) umfasst, und in welchem das Detektionsmittel (3) ein Mittel zum Detektieren eines Kontakts zwischen der Taste (5) und dem Ziel (1) ist.

15. System gemäss Anspruch 13, in welchem das Detektionsmittel (3) ein Mittel zum Detektieren des Nichtkontakts (3, 7, 8) ist.
